## Europäisches Patentamt
## European Patent Office
## Office européen des brevets

(19)

(11) Veröffentlichungsnummer : **0 170 887**
**B1**

(12)

# EUROPÄISCHE PATENTSCHRIFT

(45) Veröffentlichungstag der Patentschrift :
01.02.89

(51) Int. Cl.⁴ : **H 04 N   1/00**

(21) Anmeldenummer : 85108296.6

(22) Anmeldetag : 04.07.85

(54) Verfahren zur Zwischenspeicherung von Faksimile-Daten der Gruppen 2 und 3.

(30) Priorität : 06.07.84 DE 3424965

(43) Veröffentlichungstag der Anmeldung :
12.02.86 Patentblatt 86/07

(45) Bekanntmachung des Hinweises auf die Patenterteilung : 01.02.89 Patentblatt 89/05

(84) Benannte Vertragsstaaten :
AT BE CH DE IT LI

(56) Entgegenhaltungen :
FR-A- 2 391 611
JAPAN TELECOMMUNICATIONS REVIEW, Band 25,
Nr. 3, Juli 1983, Seiten 176-183, Tokyo, JP; M. EJIRI:
"Advanced facsimile communication network"
PHILIPS TELECOMMUNICATIONS REVIEW, Band 39,
Nr. 1, März 1981, Seiten 1-15, Hilversum, NL;
BOUWMAN et al.: "Philips P-FAX 2000 facsimile
transceivers"

(73) Patentinhaber : Siemens Aktiengesellschaft Berlin
und München
Wittelsbacherplatz 2
D-8000 München 2 (DE)

(72) Erfinder : Fellerer, Josef, Dipl.-Phys.
Willibaldstrasse 199
D-8000 München 21 (DE)

EP 0 170 887 B1

Jouve, 18, rue St-Denis, 75001 Paris, France

**Beschreibung**

Die Erfindung betrifft ein Verfahren zur Zwischenspeicherung Faksimile-Daten der Gruppen 2 und 3, wobei Faksimile-Datenfolgen von einer Ursprungsstation der Gruppe 2 oder 3 über eine Zwischenstation zu einer Zielstation der Gruppe 2 oder 3 übertragen werden, wobei die Abtastzeilen-Frequenz der Faksimile-Datenfolgen der 2. Gruppe n Zeilen/Sekunde beträgt, wobei m Bildelemente/Zeile der mit ihrem Informationsinhalt durch Faksimile-Datenfolgen der Gruppe 3 zu übertragenden Vorlagen abgetastet werden.

Es sind bereits Faksimile-Geräte der Gruppe 2 und 3 bekannt, wobei Geräte der Gruppe 3 auch Funktionen der Geräte 2 realisieren können. Geräte der Gruppe 3 erlauben einerseits die graphische Wiedergabe von Faksimile-Datenfolgen der Gruppe 2, andererseits setzen sie an Geräte der Gruppe 2 zu übertragende Vorlagen in Datenfolgen der Gruppe 2 um (vgl. Puhze, Schnelles Digitalkopieren mit dem Fernkopierer HF2060, Telcomreport 4 (1981), Heft 5, Seiten 385 bis 391). Eine Zwischenspeicherung von später an Geräte der Gruppe 2 oder 3 zu übertragende Datenfolgen ist nur über den Umweg der graphischen Wiedergabe der Daten und der späteren Rückwandlung der graphischen Vorlage in Datenfolgen möglich.

Der Erfindung liegt die Aufgabe zugrunde, ein Verfahren und eine Anordnung zur Zwischenspeicherung von Faksimile-Daten der Gruppen 2 und 3 anzugeben, wobei die abzuspeichernden Daten graphisch nicht wiederzugeben sind und nur eine geringe Speicherkapazität erforderlich sein soll.

Die Aufgabe wird erfindungsgemäß dadurch gelöst, daß von der Ursprungsstation an die Zwischenstation eine Steuerinformation über die Gruppenzugehörigkeit der Ursprungsstation, Gruppe 2 oder 3, zugeführt wird und Datenfolgen der Gruppe 2 vor der Zwischenspeicherung ihres Informationsinhaltes in einem in der Zwischenstation angeordneten Datenspeicher in Datenfolgen der Gruppe 3 umgewandelt werden, während Datenfolgen der Gruppe 3 ohne Umwandlung in die andere Darstellungsform in dem Datenspeicher zwischengespeichert werden.

Die Erfindung zeichnet sich einerseits durch den Vorteil aus, daß die Zwischenspeicherung und der Abruf von Faksimile-Datenfolgen ohne deren graphische Wiedergabe und Abtastung der Träger mit den wiedergegebenen graphischen Zeichen zwischenspeicherbar sind, und andererseits durch den Vorteil, daß die Abspeicherung der Faksimile-Datenfolgen in der Darstellungsform der Gruppe 3 relativ geringe Zwischenspeicherkapazität erfordert und Ursprungsstationen der Gruppe 2 über die Zwischenstation zu Zielstationen der Gruppe 3 Datenfolgen mit den relativ hohen Geschwindigkeiten der Gruppe 3 übertragen können, was bei großen Entfernungen zwischen Ursprungs- und Zielstation zu einer erheblichen Reduzierung der Übertragungskosten führen kann.

Die Erfindung zeichnet sich weiterhin durch den Vorteil aus, daß die Umwandlung von Datenfolgen der Gruppe 2 in Datenfolgen der Gruppe 3 durch Abtasten der erstgenannten Datenfolgen mit unterschiedlichen Frequenzen entsprechend der gewünschten Genauigkeit einer späteren Wiedergabe durchführbar ist.

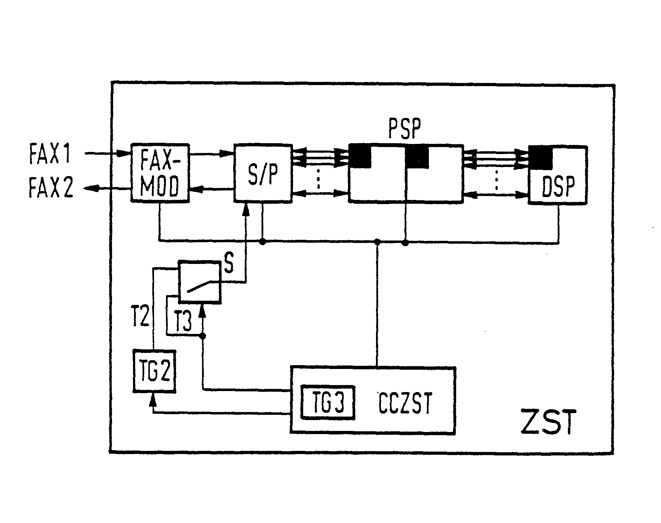

Die Erfindung wird nun anhand der Zeichnung in einem zum Verständnis erforderlichen Umfang beschrieben.

Die Anordnung zeigt eine Anordnung zur Zwischenspeicherung von Faksimile-Daten der Gruppen 2 und 3. Sie besteht aus einem Faksimile-Modem FAX-MOD, einem mit diesem verbundenen Seriell-/Parallelwandler S/P, einem mit diesem verbundenen Pufferspeicher PSP, einem Datenspeicher DSP, einem zentralen Steuerwerk CCZST mit einer Vorrichtung TG3 zur Erkennung der von der Ursprungsstation FAX1 der Anordnung ZST zugeführten Steuerinformation über die Gruppenzugehörigkeit der Ursprungsstation FAX1, Gruppe 2 oder 3, zur Steuerung eines die Erzeugung eines Taktes mit einer Frequenz T2 bewirkenden Taktgenerators TG2, zur Steuerung einer Schalteinrichtung S, die, sofern der Anordnung ZST Datenfolgen der Gruppe 2 zugeführt werden, den Takt mit der Frequenz T2, oder, sofern der Anordnung ZST Datenfolgen der Gruppe 3 zugeführt werden, den Takt T3 der Datenfolgen der Gruppe 3 an den Seriell-/Parallelwandler S/P durchschaltet.

Empfehlungen des Comité Consultatif International Télégraphique et Téléphonique CCITT unterteilen Fernkopierer oder Faksimilegeräte in drei verschiedene Gruppen, die sich unter anderem durch ihre Signalaufbereitung und die daraus resultierende Übertragungsgeschwindigkeit der von einer Vorlage abgetasteten Bildpunktinformationen unterscheiden. Geräte der Gruppe 1 und 2 arbeiten in Analogtechnik, die Übertragungszeit je A4-Seiten beträgt 6 bzw. 3 Minuten. Die digital arbeitenden Geräte der Gruppe 3 ermöglichen geringere, von der zu übertragenden Informationsmenge abhängige Übertragungszeiten.

Die Faksimile-Übertragung zwischen Geräten der Gruppen 1, 2 und 3 erfolgt bekanntermaßen in mehreren Schritten : Zunächst wird die Fernsprechverbindung zum Fernkopieren in der für Fernsprechbetrieb üblichen Weise aufgebaut. Nach dem Umschalten der Fernsprechleitung zum Fernkopierer folgt die sogenannte Einleitungsphase, in der die möglichen Gerätefunktionen identifiziert und die Betriebsverfahren ausgewählt werden. Danach schließt sich die eigentliche Dokumentenübertragung an. Die sogenannte Schlußphase beinhaltet das Beenden der Dokumentenübertragung mit den entsprechenden Betätigungssignalen. Schließlich wird auf Fernsprechbetrieb zurückgeschaltet.

Während der Dokumentenphase wird in einer sendeseitigen Einrichtung das Original für die Abtastung punktförmig beleuchtet. Das reflektierte Licht erzeugt, über eine Optik auf einen photoelektrischen Sensor konzentriert, ein dem Schwärzungsgrad der Vorlage entsprechendes elektrisches Bildpunktsignal, das in Systemen der Gruppe 3 codiert, ansonsten unmittelbar durch ein Modem moduliert und an eine empfangsseitige Einrichtung übertragen wird. Nach der dortigen Demodulation durch ein Modem werden die Bildpunktsignale in Bildpunkte zurückgewandelt.

Mit Faksimilegeräten der Gruppe 3 ist die Übertragung nur von weißen und schwarzen Bildpunkten, nicht jedoch von Grautönen realisierbar. Hohe Übertragungsgeschwindigkeiten werden durch redundanzreduzierende Quellencodierungsverfahren erzielt. Eine Gruppe (Lauflänge) von jeweils nur weißen oder nur schwarzen zusammenhängenden Bildpunkten einer Zeile wird durch ein Codewort dargestellt, wobei sich weiße und schwarze Gruppen abwechseln. Als Basismerkmal bilden üblicherweise insgesamt 1728 Bildpunkte eine horizontale Abtastzeile von 215 mm Länge. Auf diese Abmessungen ist das erfindungsgemäße Verfahren jedoch nicht beschränkt. Es ist ebensowenig auf ein bestimmtes redundanzreduzierendes Quellencodierungsverfahren, beispielsweise den sogenannten modifizierten Huffmanncode, beschränkt.

Die Anordnung ZST ist zwischen eine Ursprungsstation FAX1 und eine Zielstation FAX2 zwischengeschaltet. Die beiden Stationen FAX1, FAX2 können Faksimilegeräte der Gruppe 2 und 3 sein, wobei die Abtastzeilen-Frequenz der Faksimile-Datenfolgen der 2. Gruppe n Zeilen/Sekunde beträgt und m Bildelemente/Zeile der mit ihrem Informationsinhalt durch Faksimile-Datenfolgen der Gruppe 3 zu übertragenden Vorlagen abgetastet werden. Der Zwischenstation ZST können also von einer Ursprungsstation FAX1 der Gruppe 2 oder 3 Datenfolgen der Gruppe 2 oder 3 zugeführt werden ; sie hat einer Zielstation FAX2 der Gruppe 2 oder 3 Datenfolgen der Gruppe 2 oder 3 zu übermitteln, wobei zum Zeitpunkt der Zwischenspeicherung der Datenfolgen eine Information über die Gruppenzugehörigkeit der Zielstation FAX2 nicht vorliegt. Die Zwischenspeicherung von Datenfolgen der Gruppe 2 und 3 könnte in einem Speicher erfolgen, der sowohl Speicherkapazität für Daten im Format der Gruppe 2 als auch für Daten im Format der Gruppe 3 aufweist. Eine derartige strukturell bedingte, große Speicherkapazität soll erfindungsgemäß vermieden werden. Betrachtet man die Gruppenzugehörigkeit einer Ursprungsstation FAX1 Gruppe 2 oder 3, und die Gruppenzugehörigkeit einer Zielstation FAX2, ebenfalls Gruppe 2 oder 3, so ergeben sich folgende, die Notwendigkeit der Umwandlung der Datenfolgen von der einen in die andere Darstellungsart veranschaulichende Kombination 22, 23, 32 und 33. In der Anordnung ZST werden alle eintreffenden Datenfolgen der Gruppe 2 in Datenfolgen der Gruppe 3 umgeformt, während eintreffende Datenfolgen der Gruppe 3 ohne Umwandlung in die andere Darstellungsart zwischengespeichert werden. Die Anordnung ZST verhält sich hinsichtlich der Umwandlung eintreffender Datenfolgen wie eine Faksimilestation der Gruppe 3. Betrachtet man nun die Gruppenzugehörigkeit einer Ursprungsstation FAX1, der Anordnung ZST und einer Zielstation FAX2, so ergeben sich folgende, die Notwendigkeit der Umwandlung von Datenfolgen veranschaulichenden Kombinationen 232, 233, 332 und 333.

Stellt man beide Kombinationsfolgen 22, 23, 32, 33 und 232, 233, 332, 333 gegenüber, so zeigt sich, daß durch die Anordnung ZST nur dann eine zusätzliche Umwandlung von Datenfolgen der Gruppe 2 in Datenfolgen der Gruppe 3 und eine entsprechende Rückwandlung vorzunehmen ist, wenn Ursprungs- und Zielstation FAX1, FAX2 beide der Gruppe 2 angehören.

In den Fällen 23, 32 bzw. 233 und 332 wird die sonst in der Zielstation FAX2 der Gruppe 3 bzw. der Ursprungsstation FAX1 der Gruppe 3 vorzunehmende Umwandlung in der Anordnung ZST durchgeführt.

Gehören Ursprungs- und Zielstation FAX1, FAX2 beide der Gruppe 3 an, so erfolgt auch in der Anordnung ZST keine Umwandlung.

Von einer Ursprungsstation FAX1 werden dem Faksimile-Modem FAX-MOD in der Einleitungsphase Steuerinformationen über deren Gruppenzugehörigkeit, Gruppe 2 oder 3, zugeführt und dort durch die mit dem zentralen Steuerwerk CCZST in Verbindung stehende Vorrichtung TG3 erkannt.

Werden der Anordnung ZST Datenfolgen der Gruppe 3 zugeführt, so schaltet das zentrale Steuerwerk CCZST die Schalteinrichtung S in der Weise, daß der Takt T3 der Datenfolgen der Gruppe 3 an den Seriell-/Parallelwandler S/P durchgeschaltet wird. Werden der Anordnung ZST Datenfolgen der Gruppe 2 zugeführt, so schaltet das zentrale Steuerwerk CCZST den steuerbaren Taktgenerator TG2 und die Schalteinrichtung S in der Weise, daß ein Takt mit einer Frequenz T2 an den Seriell-/Parallelwandler S/P durchgeschaltet wird. Die vom Taktgenerator TG2 erzeugte Frequenz T2 ergibt sich aus dem Produkt der Abtastzeilen-Frequenz der Faksimile-Datenfolgen der 2. Gruppe n Zeilen/Sekunde und der Zahl m der abgetasteten Bildelemente/Zeile der mit ihrem Informationsinhalt durch Faksimile-Datenfolgen der Gruppe 3 zu übertragenden Vorlagen. Beide Werte n, m können fest vorgegeben sein, beispielsweise n = 6 Zeilen/Sekunde und m = 1 728 Bildelemente pro Zeile, oder in der Einleitungsphase zwischen Ursprungsstation FAX1 und Anordnung ZST abgestimmt werden.

Die Abtastung von Datenfolgen der Gruppe 2 kann erfindungsgemäß auch mit einer Frequenz $T2 = a \times m \times n$ [Hz] erfolgen, wobei a der Kehrwert der Mindestzahl jeweils in einer Zeile der zu übertragenden Vorlagen nebeneinander angeordneter weißer bzw. nicht weißer Bildelemente ist. Geht man beispielsweise davon aus, daß in jeder Zeile der zu übertragenden Vorlagen mindestens zwei weiße bzw. nicht weiße Bildelemente nebeneinander angeordnet sind, so lassen sich die umzuwandelnden Datenfolgen der Gruppe 2 mit einer Frequenz $T2 = 1/2 \times m \times n$ [Hz] abtasten, um das Auftreten von Umwandlungsfehlern zu minimieren. Die zentrale Steuerung CCZST zählt die Abtastimpulse jeweils einer Gruppe nebeneinander angeordneter weißer bzw. nicht weißer Bildelemente und ordnet diese Zahl einem vorgegebenen Code, beispielsweise dem modifizierten Huffmanncode, zu. Bei einer Abtastung der umzuwandelnden Daten der Gruppe 2 mit einer Frequenz $T2 \leq m \times n$ [Hz], beispielsweise $T2 = 1/2 \times m \times n$ [Hz], werden aus der Menge m aller im betreffenden Code vorgesehenen Codeworte für die Anzahl zusammenhängender weißer bzw. nicht weißer Bildelemente nur die Codeworte für 0, 2, 4, ... m nebeneinander angeordneter gleichartiger Bildelemente benötigt. Umgekehrt ist der betreffende Code beispielsweise von m auf 2 m Codeworte zu ergänzen, wenn die Abtastung mit einer Frequenz $T2 \geq 2 \, m \times n$ [Hz] erfolgt.

Mit Hilfe höherer Abtastfrequenzen lassen sich Beginn und Ende des abzutastenden Signals genauer erfassen, andererseits erfordert die Abspeicherung zusätzlicher Abtastwerte erhöhten Speicherbedarf.

Das zentrale Steuerwerk CCZST überträgt die im Seriell-/Parallelwandler von serieller in parallele Darstellung gewandelten Daten in den Pufferspeicher PSP, der wie in der Zeichnung dargestellt aus zwei Teilen bestehen kann, und führt die Codierung der durch die Abtastung der ursprünglichen Daten der Gruppe 2 in Daten der Gruppe 3 durch. Die auf diese Weise codierten Daten können in einem in der Zeichnung nicht dargestellten, gegebenenfalls der zentralen Steuerung CCZST zugeordneten Speicher zwischengespeichert und anschließend im Datenspeicher DSP abgespeichert werden. Während der Codierung der in der einen Hälfte des Pufferspeichers PSP abgespeicherten Daten werden weitere Daten aus dem Seriell-/Parallelwandler S/P in die andere Hälfte des Pufferspeichers PSP eingelesen. Nach der Bearbeitung der ersten Daten erfolgt die Bearbeitung der zweiten Daten. Die Übertragung der Informationen aus dem Seriell-/Parallelwandler S/P in den Pufferspeicher PSP erfolgt vorzugsweise mit einer Hardware-Steuerung Direct Memory Access, die in die zentrale Steuerung integriert sein kann.

Datenfolgen der Gruppe 3 werden von der Anordnung ZST nicht umgewandelt und können ohne weitere Bearbeitung in den Datenspeicher DSP eingespeichert werden. Datenfolgen der Gruppe 3 enthalten jedoch in Abhängigkeit von der zwischen Sende- und Empfangsstation abgestimmten minimalen Zeilenübertragungszeit Füllinformationen, die in keinem Bezug zum Inhalt der Faksimile-Vorlagen stehen. Füllinformationen sind von den übrigen Informationen der Faksimile-Datenfolgen der Gruppe 3 unterscheidbar und können vor deren Abspeicherung ausgeblendet werden.

Der Abruf der im Datenspeicher DSP abgespeicherten Daten in der Darstellungsform der Gruppe 3 und deren Übertragung an eine Zielstation FAX2 erfolgt in analoger Weise ; an eine Zielstation FAX2 der Gruppe 3 werden die ursprünglich im Datenspeicher DSP abgespeicherten Daten ohne vorherige Umwandlung, gegebenenfalls nach einer Einblendung von Füllinformationen, übertragen, eine Rückwandlung der im Datenspeicher DSP abgespeicherten Daten in der Darstellungsform der Gruppe 3 in Daten der Darstellungsform der Gruppe 2 ist erforderlich, sofern die Zielstation FAX2 durch ein Faksimilegerät der Gruppe 2 gebildet wird.

**Patentansprüche**

1. Verfahren zur Zwischenspeicherung von Faksimile-Daten der Gruppen 2 und 3, wobei Faksimile-Datenfolgen von einer Ursprungsstation der Gruppe 2 oder 3 über eine Zwischenstation zu einer Zielstation der Gruppe 2 oder 3 übertragen werden, wobei die Abtastzeilen-Frequenz der Faksimile-Datenfolgen der 2. Gruppe n Zeilen/Sekunde beträgt, wobei m Bildelemente/Zeile der mit ihrem Informationsinhalt durch Faksimile-Datenfolgen der Gruppe 3 zu übertragenden Vorlagen abgetastet werden, dadurch gekennzeichnet, daß von der Ursprungsstation (FAX1) an die Zwischenstation (ZST) eine Steuerinformation über die Gruppenzugehörigkeit der Ursprungsstation (FAX1), Gruppe 2 oder 3, zugeführt wird und Datenfolgen der Gruppe 2 vor der Zwischenspeicherung ihres Informationsinhaltes in einem in der Zwischenstation (ZST) angeordneten Datenspeicher (DSP) in Datenfolgen der Gruppe 3 umgewandelt werden, während Datenfolgen der Gruppe 3 ohne Umwandlung in die andere Darstellungsform in dem Datenspeicher (DSP) zwischengespeichert werden.

2. Verfahren nach Anspruch 1, dadurch gekennzeichnet, daß die im Datenspeicher (DSP) der Zwischenstation (ZST) in der Darstellungsform der Gruppe 3 zwischengespeicherten Datenfolgen vor ihrer Übertragung an eine Zielstation (FAX2) der Gruppe 2 in Datenfolgen der Gruppe 2 umgewandelt werden, während die im Datenspeicher (DSP) zwischengespeicherten Datenfolgen an eine Zielstation (FAX2) der Gruppe 3 ohne vorherige Umwandlung in die andere Darstellungsform übertragen werden.

3. Verfahren nach Anspruch 1, dadurch gekennzeichnet, daß die in der Zwischenstation (ZST) empfangenen Datenfolgen der Gruppe 2 vor der Zwischenspeicherung ihres Informationsinhaltes im Datenspeicher (DSP) durch Demodulation, Abtastung mit einer Frequenz $T2 = m \times n$ [Hz] und Codierung der Abtastwerte nach einem redundanzreduzierenden Quellencodierungsverfahren in Datenfolgen der Gruppe 3 umgewandelt werden.

4. Verfahren nach Anspruch 2 oder 3, dadurch gekennzeichnet, daß die im Datenspeicher (DSP) der Zwischenstation (ZST) in der Darstellungsform der Gruppe 3 zwischengespeicherten codierten Datenfolgen vor ihrer Übertragung an eine Zielstation (FAX2) der Gruppe 2 durch Decodierung und Modulation in Datenfolgen der Gruppe 2 umgewandelt werden.

5. Verfahren nach Anspruch 3, dadurch gekennzeichnet, daß die Abtastung der Datenfolgen der Gruppe 2 mit einer Frequenz T2 = a x m x n [Hz] erfolgt, wobei a der Kehrwert der Mindestzahl jeweils in einer Zeile der zu übertragenden Vorlagen nebeneinander angeordneter weißer bzw. nicht weißer Bildelemente ist.

6. Anordnung zur Durchführung des Verfahrens nach einem der Ansprüche 1 bis 5, gekennzeichnet durch ein Faksimile-Modem (FAX-MOD), einen mit diesem verbundenen Seriell-/Parallelwandler (S/P), einen mit diesem verbundenen Pufferspeicher (PSP), einen Datenspeicher (DSP), ein zentrales Steuerwerk (CCZST) mit einer Vorrichtung (TG3) zur Erkennung der von der Ursprungsstation (FAX1) der Anordnung (ZST) zugeführten Steuerinformation über die Gruppenzugehörigkeit der Ursprungsstation (FAX1), Gruppe 2 oder 3, zur Steuerung eines die Erzeugung eines Taktes mit der Frequenz T2 bewirkenden Taktgenerators (TG2), zur Steuerung einer Schalteinrichtung S, die sofern der Anordnung (ZST) Datenfolgen der Gruppe 2 zugeführt werden, den Takt mit der Frequenz T2 oder, sofern der Anordnung (ZST) Datenfolgen der Gruppe 3 zugeführt werden, den Takt T3 der Datenfolgen der Gruppe 3 an den Seriell-/Parallelwandler (S/P) durchschaltet.

## Claims

1. Method for the intermediate storage of group 2 and 3 facsimile data, facsimile data sequences being transmitted from a group 2 or 3 originating station via an intermediate station to a group 2 or 3 destination station, with the scanning line frequency of the facsimile data sequences of the group 2 being n lines/second, m picture elements/line of the originals to be transmitted with the information content by facsimile data sequences of group 3 being scanned, characterized in that a control information on the group association of the originating station (FAX1), group 2 or 3, is supplied from the originating station (FAX1) to the intermediate station (ZST) and group 2 data sequences are converted into group 3 data sequences before the intermediate storage of their information content in a data store (DSP) arranged in the intermediate station (ZST), whilst group 3 data sequences are intermediately stored in the data store (DSP) without conversion into the other form of representation.

2. Method according to Claim 1, characterized in that the data sequences intermediately stored in the group 3 form of representation in the data store (DSP) of the intermediate station (ZST) are converted, before their transmission to a group 2 destination station (FAX2), into group 2 data sequences, whilst the data sequences intermediately stored in the data store (DSP) are transmitted to a group 3 destination station (FAX2) without prior conversion into the other form of representation.

3. Method according to Claim 1, characterized in that the group 2 data sequences received in the intermediate station (ZST) are converted, before their information content is intermediately stored in the data store (DSP), into group 3 data sequences via demodulation, sampling at a frequency of T2 = m x n (Hz) and coding of the samples in accordance with a redundancy-reducing source encoding method.

4. Method according to Claim 2 or 3, characterized in that the coded data sequences intermediately stored in the group 3 form of representation in the data store (DSP) of the intermediate station (ZST) are converted, before their transmission to a group 2 destination station (FAX2), into group 2 data sequences by decoding and modulation.

5. Method according to Claim 3, characterized in that the group 2 data sequences are sampled at a frequency of T2 = a x m x n (Hz), a being the reciprocal of the minimum number of white or non-white picture elements in each case arranged next to one another in a line of the originals to be transmitted.

6. Arrangement for carrying out the method according to one of Claims 1 to 5, characterized by a facsimile modem (FAX-MOD), a serial/parallel converter (S/P) connected to the former, a buffer store (PSP) connected to the latter, a data store (DSP), a central control unit (CCZST) with a device (TG3) for recognising the control information on the group association of the originating station (FAX1) supplied to the arrangement (ZST) from the originating station (FAX1), and group 2 or 3, for controlling a clock generator (G2) which causes a clock with the frequency T2 to be generated, for controlling a switching device S which, if group 2 data sequences are being supplied to the arrangement (ZST), switches through the clock with the frequency T2, or, if group 3 data sequences are supplied to the arrangement (ZST), switches through the clock T3 of the group 3 data sequences, to the serial/parallel converter (S/P).

## Revendications

1. Procédé pour mémoriser temporairement des données de fac-similé des groupes 2 et 3, selon lequel des suites de données de fac-similé provenant d'un poste d'origine du groupe 2 ou 3 sont transmises par l'intermédiaire d'un poste intermédiaire à un poste de destination du groupe 2 ou 3, la fréquence de lignes de balayage des suites de données de fac-similé du 2ème groupe étant égale à n lignes/seconde, l'exploration par balayage s'effectuant sur m éléments d'image/ligne des originaux devant être transmis, avec leur contenu en informations, au moyen de suites de données de fac-similé du groupe 3, caractérisé par le fait que le poste d'origine (FAX1) envoie au poste intermédiaire (ZST) une information de commande concernant l'appartenance du poste d'origine (FAX1) au groupe 2 ou 3, et des suites de données du groupe 2 sont converties en des suites de données du groupe 3, avant la mémorisation temporaire de leur contenu en informations dans une mémoire de données (DSP) située dans le poste intermédiaire (ZST), tandis que des suites de données du groupe 3 non converties dans l'autre forme de représentation sont mémorisées temporairement dans la mémoire de données (DST).

2. Procédé suivant la revendication 1, caractérisé par le fait que les suites de données mémorisées temporairement dans la mémoire de données (DST) du poste intermédiaire (ZST) dans la forme de représentation du groupe 3 sont converties en des suites de données du groupe 2 avant leur transmission à un poste de destination (FAX2) du groupe 2, tandis que les suites de données mémorisées temporairement dans la mémoire de données (DSP) sont transmises à un poste de destination (FAX2) du groupe 3 sans conversion préalable dans l'autre forme de représentation.

3. Procédé suivant la revendication 1, caractérisé par le fait que les suites de données du groupe 2, reçues dans le poste intermédiaire (ZST), sont converties, avant la mémorisation temporaire de leur contenu en informations dans la mémoire de données (DSP), en des suites de données du groupe 3 par démodulation, exploration par balayage avec une fréquence T2 = m x n (Hz) et codage des valeurs d'exploration selon un procédé de codage source réduisant la redondance.

4. Procédé suivant la revendication 2 ou 3, caractérisé par le fait que les suites codées de données, mémorisées temporairement dans la mémoire intermédiaire (DSP) du poste intermédiaire (ZST) dans la forme de représentation du groupe 3 sont converties par codage et modulation en des suites de données du groupe 2, avant leur transmission à un poste de destination (FAX2) du groupe 2.

5. Procédé suivant la revendication 3, caractérisé par le fait que l'exploration par balayage des suites de données du groupe 2 s'effectue à une fréquence T2 = a x m x n (Hz), a étant l'inverse du nombre minimum d'éléments d'image blancs ou non blancs disposés respectivement côte-à-côte dans une ligne de l'original à transmettre.

6. Dispositif pour la mise en œuvre du procédé suivant l'une des revendications 1 à 5, caractérisé par un modem de fac-similé (FAX-MOD), un convertisseur série/parallèle (S/P) relié à ce modem, une mémoire tampon (FSP) reliée à ce convertisseur, une mémoire de données (DSP), une unité centrale de commande (CCZST) comportant un dispositif (TG3) servant à identifier l'information de commande envoyée par le poste d'origine (FAX1) au dispositif (ZST) concernant l'appartenance du poste d'origine (FAX1) au groupe 2 ou 3, à commander un générateur de cadence (TG2) servant à produire une cadence possédant la fréquence T2, et à commander un dispositif de commutation (S) qui, dans la mesure où des suites de données du groupe 2 sont envoyées au dispositif (ZST), transmet directement la cadence possédant la fréquence T2 ou, dans la mesure où des suites de données du groupe 3 sont envoyées au dispositif (ZST), transmet directement la cadence T3 des suites de données du groupe 3 au convertisseur série/parallèle (S/P).